# EUROPEAN PATENT APPLICATION

(11) **EP 4 507 111 A1**
(43) Date of publication of application: **12.02.2025**
(21) Application number: 22960698.3
(22) Date of filing: 29.12.2022
(51) Int. Cl.: H01M 50/528

(54) **CONNECTING MEMBER, BATTERY CELL, BATTERY, AND ELECTRIC DEVICE**

(30) Priority: 29.09.2022 CN 202211200702
(71) Applicant: Contemporary Amperex Technology (Hong Kong) Limited, Central, Central And Western District (HK)
(72) Inventor: WANG, Liqin, Ningde City, Fujian 352100 (CN); XING, Chengyou, Ningde City, Fujian 352100 (CN); LI, Quankun, Ningde City, Fujian 352100 (CN); CHENG, Qi, Ningde City, Fujian 352100 (CN); LIN, Chunguang, Ningde City, Fujian 352100 (CN)
(74) Representative: Kraus & Lederer PartGmbB
(86) International application number: PCT/CN2022/143162
(87) International publication number: WO 2024/066105

(57) **Abstract**

The application discloses a connection member, a battery cell, a battery and an electric device. The connection member is used to achieve an electrical connection between an electrode terminal and an electrode tab of a battery cell. The connection member includes a body portion and an electrode terminal welding portion connected to the body portion. The body portion is used to be connected to the electrode tab, and the electrode terminal welding portion is used to be welded to the electrode terminal. A hardness of the electrode terminal welding portion is greater than a hardness of the body portion. The embodiments of the application can enhance the service life of the battery cell.

## Description

### CROSS REFERRENCE TO RELATED APPLICATION

The application claims the priority benefits of Chinese Patent Application No. 202211200702.5 filed on September 29, 2022 and entitled "CONNECTION MEMBER, BATTERY CELL, BATTERY AND ELECTRIC DEVICE", the disclosure of which is incorporated herein by reference in its entirety.

### TECHNICAL FIELD

The application relates to the field of battery, and in particular to a connection member, a battery cell, a battery and an electric device.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc.

In development of the battery technology, how to enhance the service life of battery cells is an important development direction in the battery technology.

### SUMMARY

The application provides a connection member, a battery cell, a battery and an electric device, which can enhance the service life of the battery cell.

In a first aspect, the application provides a connection member for achieving an electrical connection between an electrode terminal and an electrode tab of a battery cell, the connection member includes a body portion and an electrode terminal welding portion connected to the body portion, the body portion is used to be connected to the electrode tab,the electrode terminal welding portion is used to be welded to the electrode terminal, and a hardness of the electrode terminal welding portion is greater than a hardness of the body portion.

In the embodiments of the application, the hardness of the electrode terminal welding portion is greater than the hardness of the body portion. On the premise that the hardness of the body portion satisfies the requirements, the increased hardness of the electrode terminal welding portion can increase its ability to resist deformation during transportation and assembly, and the smaller deformation can increase the fitting tightness between the electrode terminal welding portion and the electrode terminal, thereby improving the welding reliability of the electrode terminal and connection member, and thus improving the service life of the battery cell.

In some embodiments, the hardness of the body portion is H, the hardness of the electrode terminal welding portion is H1, and H1 and H satisfy:1.05<H1/H≤3.

The value of H1/H is limited to be less than or equal to 3, so as to reduce the internal stress during welding of the electrode terminal welding portion, thereby reducing the occurrence of cracks and enhancing welding quality. The value of H1/H is limited to be greater than or equal to 1.05, so as to further improve the deformation resistance of the electrode terminal welding portion, enhance welding effect, and enhance the stability and safety of the battery cell.

In some embodiments, H1 and H satisfy: 1.05≤H1/H≤2. The value of H1/H is further limited to be less than or equal to 2, so as to further reduce the internal stress generated during welding, thereby further reducing the occurrence of cracks during welding and enhancing welding quality.

In some embodiments, H satisfies: 20kgf/mm²≤H≤70kgf/mm². The hardness of the body portion is limited to be less than or equal to 70kgf/mm², so as to reduce the cracks and enhance welding quality. The hardness of the body portion is limited to be greater than or equal to 20kgf/mm², so as to enhance the strength of the body portion, make it less prone to deformation, and enhance welding quality.

In some embodiments, H1 satisfies: 20kgf/mm² < H1≤210kgf/mm². The hardness of the electrode terminal welding portion is limited to be less than or equal to 210kgf/mm², so as to reduce the internal stress during welding, reduce the occurrence of cracks and enhance welding quality. The hardness of the electrode terminal welding portion is limited to be greater than 20kgf/mm², so as to enhance the strength of the electrode terminal welding portion, make it less prone to deformation, and enhance welding quality.

In some embodiments, a thickness of the electrode terminal welding portion is less than a thickness of the body portion.

When the hardness of the electrode terminal welding portion is relatively high relative to the body portion, the internal stress of the electrode terminal welding portion during welding is greater. Therefore, the thickness of the electrode terminal welding portion relative to the body portion is reduced, so as to reduce the welding power during welding, so that it is possible to reduce the internal stress during welding, reduce the occurrence of cracks, and enhance welding quality.

In some embodiments, the electrode terminal welding portion is provided with a plurality of grooves on a side away from the electrode terminal.

By providing the grooves, it is possible to reduce a thickness of a local region of the electrode terminal welding portion, reduce the welding power, reduce the internal stress of welding, enhance the welding effect, and thereby enhance the stability and safety of the battery cell. Meanwhile, by providing the grooves, it is possible to increase a roughness of the surface of the electrode terminal welding portion away from the electrode terminal, thereby enhancing welding quality.

In some embodiments, the electrode terminal welding portion includes a body region and a knurling region, the grooves are recessed from a surface of the body region away from the electrode terminal, and the knurling region corresponds to bottom walls of the grooves; a hardness of the knurling region is greater than a hardness of the body region.

The hardness of the knurling region is greater than the hardness of the body region, which means that the deformation resistance of the bottom walls of the grooves is increased after the knurling region is thinned, thereby enhancing welding quality.

In some embodiments, a depth of the grooves is 0.03mm-0.2mm.

The depth of the grooves is limited to be less than or equal to 0.2mm, so as to reduce the possibility of welding through the bottom walls of the grooves. The depth of the grooves 312a is limited to be greater than or equal to 0.03mm, so as to significantly reduce the thickness of the bottom walls and reduce welding power, thereby reducing the internal stress during welding, reducing the occurrence of cracks and enhancing welding quality.

In some embodiments, the body portion includes a first surface and a second surface arranged opposite to each other, and the second surface faces towards the electrode terminal; the connection member includes a recess, the recess is recessed relative to the first surface, and the electrode terminal welding portion is located at a bottom of the recess.

In some embodiments, the connection member further includes a connection portion, and the connection portion protrudes from the second surface and connects the body portion and the electrode terminal welding portion; the connection portion and the electrode terminal welding portion enclose and form the recess.

By providing the connection portion, the electrode terminal welding portion and the body portion are staggered in the thickness direction of the connection member, so that the electrode terminal welding portion can be located closer to the electrode terminal when the connection member is mounted in the battery cell, facilitating the connection therebetween.

In some embodiments, a value range of an included angle between the connection portion and the body portion is (91°, 130°].

The withdrawing pattern angle is limited to be greater than 91° for easy demolding; the withdrawing pattern angle is limited to be less than or equal to 130°, so as to reduce processing difficulty.

In some embodiments, a ratio of a thickness of the connection portion to the thickness of the body portion is greater than or equal to 4/5. Thereby the structural instability of the connection member when the thickness of the connection portion is too small is avoided.

In some embodiments, the thickness H31 of the electrode terminal welding portion and the thickness H33 of the body portion satisfy: 5%≤(H33-H31)/H33≤65%.

The value of (H33-H31)/H33 is limited to be less than or equal to 65%, so as to reduce the possibility of electrode terminal welding portion being melted through; the value of (H33-H31)/H33 is limited to be greater than or equal to 5%, so as to effectively reduce the internal stress of welding, reduce cracks, and enhance welding quality.

In some embodiments, an area of a surface of the electrode terminal welding portion facing towards the electrode terminal is S1, an area of a surface of the connection member facing towards the electrode terminal is S2, and S 1 and S2 satisfy: 1/50≤S1/S2≤3/5.

The value of S1/S2 is limited to be greater than or equal to 1/50, so as to effectively solve the problem of easy deformation; the value of S1/S2 is limited to be less than or equal to 3/5, so as to reduce processing difficulty.

In a second aspect, the application provides a battery cell including an electrode terminal, an electrode assembly and the connection member provided by any embodiment in the first aspect, the electrode assembly includes an electrode tab, and the connection member is used to achieve an electrical connection between the electrode terminal and the electrode tab.

In a third aspect, the application provides a battery including a plurality of battery cells, and the battery cells include the connection member provided by any embodiment in the first aspect.

In a fourth aspect, the application provides an electric device including a battery, and the battery includes the connection member provided by any embodiment in the first aspect.

### BRIEF DESCRIPTION OF THE DRAWINGS

The features, advantages and technical effects of the exemplary embodiments of the application will be described below with reference to the drawings.
Fig. 1 is a schematic structural view of a vehicle of an embodiment of the application;
Fig. 2 is a schematic structural view of a battery of an embodiment of the application;
Fig. 3 is a schematic structural exploded view of a battery cell of an embodiment of the application;
Fig. 4 is a schematic structural perspective view of a connection member of an embodiment of the application;
Fig. 5 is a schematic top view of the connection member as shown in Fig. 4;
Fig. 6 is a schematic sectional view of the connection member in the A-A' direction as shown in Fig. 5;
Fig. 7 is a schematic side view of the connection member as shown in Fig. 4;
Fig. 8 is a schematic structural exploded view of a battery cell of another embodiment of the application;
Fig. 9 is a schematic structural view of a connection member of another embodiment of the application;
Fig. 10 is a schematic top view of a connection member of another embodiment of the application;
Fig. 11 is a schematic side view of the connection member as shown in Fig. 9;
Fig. 12 is a schematic structural exploded view of a battery cell of yet another embodiment of the application;
Fig. 13 is a schematic structural view of a connection member of yet another embodiment of the application;
Fig. 14 is a schematic structural view of a connection member of yet another embodiment of the application;
Fig. 15 is a schematic top view of a connection member of yet another embodiment of the application;
Fig. 16 is a schematic sectional view of the connection member in the B-B' direction as shown in Fig. 15;
Fig. 17 is a schematic structural view of a connection member of still another embodiment of the application;
Fig. 18 is a schematic structural top view of a connection member of still another embodiment of the application;
Fig. 19 is a schematic sectional view of the connection member in the C-C' direction as shown in Fig. 18.

The views are not necessarily plotted in actual proportion in the drawings.

The reference numbers in the detailed embodiments are as follows:
1, vehicle; 10, battery; 11, case; 111. first case portion; 112, second case portion; 20, battery cell; 21, housing; 211, housing body; 2111, blue membrane; 212, cover plate; 213, pressure relief mechanism; 214, electrode terminal; 214a, positive electrode terminal; 214b, negative electrode terminal; 22, electrode assembly; 221, main portion; 222, electrode tab; 222a, positive electrode tab; 222b, negative electrode tab; 200, battery module; 30, connection member; 31, electrode terminal welding portion; 311, body region; 312, knurling region; 312a, groove; 32, connection portion; 33, body portion; 331, electrode tab welding region; 332, notch; 333, chamfered structure; 334, first surface; 335, second surface; 336, recess; 40, motor; 50, controller; X, first direction; Y, second direction; Z, third direction.

### DETAILED DESCRIPTION

In order to make the purpose, the solution and the advantages of the embodiments of the application clearer, the technical solution of the embodiments of the application will be described clearly and completely below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the battery cell may include a lithium ion secondary battery, a lithium ion primary battery, a lithium sulfur battery, a sodium lithium ion battery, a sodium ion battery, a magnesium ion battery, or the like, which is not limited by the embodiments of the application. The battery cell may be in the form of a cylinder, a flat body, a cuboid, or other shape, which is not limited by the embodiments of the application. The battery cell are generally divided into three types in terms of packaging manner: cylindrical battery cell, cuboid battery cell and soft-pack battery cell, which is not limited by the embodiments of the application.

The battery mentioned in the embodiments of the application refers to a single physical module including one or more battery cells to provide higher voltage and capacity. For example, the battery mentioned in the application may include a battery module or a battery pack or the like. The battery generally includes a case for packaging one or more battery cells. The case can prevent liquid or other foreign matter from affecting the charging or discharging of the battery cell.

The battery cell includes an electrode assembly and electrolyte solution, and the electrode assembly is composed of a positive electrode sheet, a negative electrode sheet and a separator membrane. The battery cell operates mainly by moving metal ions between the positive and negative electrode sheets. The positive electrode sheet includes a positive electrode current collector and a positive electrode active material layer coated on a surface of the positive electrode current collector. The positive electrode current collector which is not coated with the positive electrode active material layer protrudes from the positive electrode current collector which is coated with the positive electrode active material layer. The positive electrode current collector which is not coated with the positive electrode active material layer serves as a positive electrode tab. Taking a lithium ion battery as an example, the material of the positive electrode current collector may be aluminum, and the positive electrode active material may be lithium cobaltate, lithium iron phosphate, lithium ternary or lithium manganate or the like. The negative electrode sheet includes a negative electrode current collector and a negative electrode active material layer coated on a surface of the negative electrode current collector. The negative electrode current collector which is not coated with the negative electrode active material layer protrudes from the negative electrode current collector which is coated with the negative electrode active material layer. The negative electrode current collector which is not coated with the negative electrode active material layer serves as a negative electrode tab. The material of the negative electrode current collector may be copper, and the negative electrode active material may be carbon, silicon or the like. In order to ensure that a large current doe not cause fusing, there are a plurality of positive electrode tabs stacked together, and there are a plurality of negative electrode tabs stacked together. The material of the separator membrane may be polypropylene (PP) or polyethylene (PE) or the like. In addition, the electrode assembly may be of a wound structure or a laminated structure, which is not limited by the embodiments of the application.

The battery cell includes an electrode assembly, electrolyte solution, a housing body accommodating the electrode assembly and the electrolyte solution, and a cover plate assembled on the housing body. The cover plate is usually equipped with an electrode terminal for inputting or outputting electrical energy. When assembling the battery cell, the connection between the electrode assembly and the electrode terminal on the cover plate is generally indirectly connected through a connection member, that is, the connection member is electrically connected to the electrode assembly and the electrode terminal by welding respectively.

The inventor has found that the connection member is more prone to deformation during transportation and assembly, and the deformation of the connection member has a significant impact on the subsequent welding effect, especially the portion of the connection member that is welded to the electrode terminal, the deformation of which has a significant impact on the welding effect, reducing the welding reliability of the electrode terminal and connection member and reducing the service life of the battery cell.

In view of this, the application provides a technical solution that increases the hardness of the portion welded to the electrode terminal in the connection member so that it is greater than the hardness of the portion of the connection member welded to the electrode assembly. Therefore, on the premise that the hardness of the portion of the connection member welded to the electrode assembly satisfies the requirements, the hardness of the portion of the connection member welded to the electrode terminal is greater, thereby enhancing the ability to resist deformation, and the smaller deformation increases the fitting tightness of the electrode terminal and the connection member, thereby improving the welding reliability of the electrode terminal and the connection member, and thus improving the service life of the battery cell.

The battery cells described in the embodiments of the application are applicable to batteries and electric devices employing battery cells.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

All the technical solutions described in the embodiments of the application are applicable to an electric device employing a battery. The electric device may be a vehicle, a mobile phone, a portable device, a notebook computer, a ship, a spacecraft, an electric toy and a power tool or the like. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

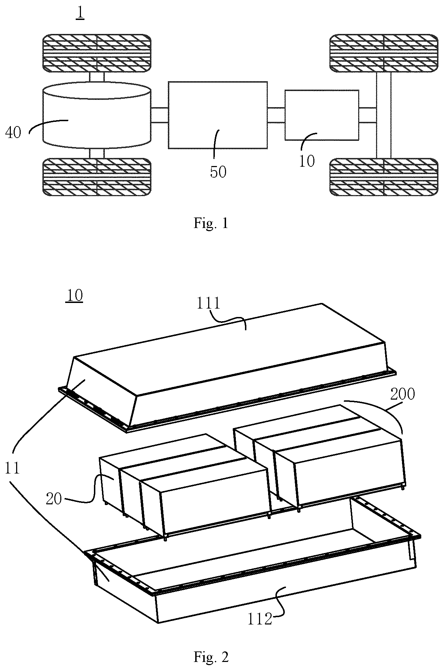

Fig. 1 is a schematic structural view of a vehicle of an embodiment of the application.

As shown in Fig. 1, the vehicle 1 may be an oil automobile, a gas automobile or a a new energy automobile, and the new energy automobile may be a pure electric automobile, a hybrid automobile or an extended range automobile and the like. Inside the vehicle 1, there may be provided with a motor 40, a controller 50 and a battery 10, and the controller 50 is used for controlling the battery 10 to power the motor 40. For example, the battery 10 may be provided at a bottom or a head or a rear of the vehicle 1. The battery 10 may be used to power the vehicle 1. For example, the battery 10 may serve as an operational power source of the vehicle 1 for a circuitry system of the vehicle 1, for example, for operational power requirements during start-up, navigation and traveling of the vehicle 1. In another embodiment of the application, the battery 10 may serve not only as an operational power source for the vehicle 1, but also as a drive power source for the vehicle 1 to provide a drive power for the vehicle 1 instead of or partially instead of fuel or natural gas.

In order to meet different power requirements, the battery may include a plurality of battery cells, in which the plurality of battery cells may be connected in series, parallel, or in a mixed manner, where the mixed manner refers to a hybrid of series and parallel connection. A battery can also be referred to as a battery pack. In some embodiments, a plurality of battery cells may be connected in series or in parallel or in the mixed manner to form a battery module at first, and then a plurality of battery modules are connected in series or in parallel or in the mixed manner to form the battery. That is, a plurality of battery cells may directly form a battery, or a plurality of battery cells may also form battery modules at first and then the battery modules may form a battery.

Fig. 2 is a schematic structural view of a battery of an embodiment of the application.

As shown in Fig. 2, the battery 10 may include at least one battery module 200. The battery module 2 includes a plurality of battery cells 20. The battery 10 may further include a case 11, the case 11 is of a hollow structure inside, and a plurality of battery cells 20 are accommodated in the case 11. Fig. 2 shows a possible implementation of the case 11 of the embodiments of the application. The case 11 may include two parts, which are herein referred to as a first case portion 111 and a second case portion 112 respectively. The first case portion 111 and the second case portion 112 are capped together. The shapes of the first case portion 111 and the second case portion 112 may be determined based on the shape combined by the battery module 200, and at least one of the first case portion 111 and the second case portion 112 has an opening. For example, as shown in Fig. 2, each the first case portion 111 and the second case portion 112 may be a hollow rectangular prism and each has only one opening surface. The opening of the first case portion 111 and the opening of the second case portion 112 are arranged opposite to each other, and the first case portion 111 and the second case portion 112 are capped to each other so as to form the case 11 with a closed chamber.

For another example, unlike Fig. 2, only one of the first case portion 111 and the second case portion 112 may be a hollow rectangular prism with an opening, while the other is plate-shaped so as to cap the opening. For example, taking the second case portion 112 as a hollow rectangular prism and with only one opening surface and the first case portion 111 as plate-shaped as an example, the first case portion 111 is capped at the opening of the second case portion 112 so as to form a case 11 with a closed chamber, and the closed chamber can be used to accommodate a plurality of battery cells 20. A plurality of battery cells 20 are combined in parallel, in series, or in the mixed manner and then placed inside the case 11 formed by capping the first case portion 111 and the second case portion 112 to each other.

In some embodiments, the battery 10 may further include other structures, which will not be repeated one by one herein. For example, the battery 10 may further include a bus bar member for achieving an electrical connection among a plurality of battery cells 20, for example, in parallel, in series, or in the mixed manner. Specifically, the bus bar member may achieve the electrical connection among the battery cells 20 by connecting the electrode terminals of the battery cells 20. Furthermore, the bus bar member may be fixed to the electrode terminals of the battery cells 20 by welding. The electrical energy of the plurality of battery cells 20 can be further led out by a conductive mechanism through the case 11.

Based on different power requirements, the amount of battery cells 20 in the battery module 200 may be set to any value. A plurality of battery cells 20 may be connected in series, in parallel, or in the mixed manner so as to achieve a larger capacity or power. Due to the possibility of a relatively large amount of battery cells 20 included in each battery 10, for ease of installation, the battery cells 20 are arranged in groups and each group of battery cells 20 forms a battery module 200. The amount of the battery cells 20 included in the battery module 200 is not limited, and can be set according to specific requirements. The battery may include a plurality of battery modules 200, and the battery modules 200 may be connected in series, in parallel, or in the mixed manner.

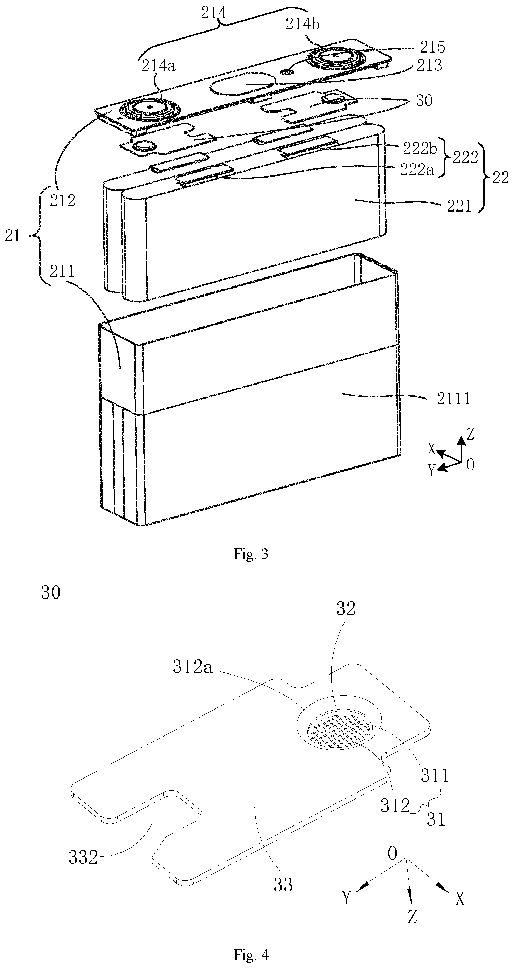

Fig. 3 is a schematic structural exploded view of a battery cell of an embodiment of the application.

As shown in Fig. 3, the battery cell 20 of the embodiments of the application includes one or more electrode assembly 22 and a housing 21 for accommodating the electrode assembly 22.

The housing 21 of the embodiments of the application may be of a polyhedral structure. Specifically, the housing 21 may include a housing body 211 and a cover plate 212. Here the housing body 211 may be of a hollow structure with at least one end forming an opening, and the shape of the cover plate 212 may be adapted to the shape of the housing body 211. The cover plate 212 is used to cap the opening of the housing body 211, so that the housing 21 isolates the internal environment of the battery cell 20 from the external environment. If the housing body 211 is a hollow structure with one end forming an opening, then the amount of the cover plate 212 may be set to one; if the housing body 211 is of a hollow structure with two opposite ends forming openings, then the amount of the cover plates 212 may be set to two, and the two cover plates 212 are respectively capped to the openings at the two ends of the housing body 211.

The housing body 211 of the embodiments of the application may be of various materials, such as copper, iron, aluminum, steel, aluminum alloy or the like. The cover plate 212 may also be of various materials, such as copper, iron, aluminum, steel, aluminum alloy or the like. The material of the cover plate may be the same or different from the material of the housing body 211.

The housing body 21 of the embodiments of the application may have various shapes such as a cylinder, a rectangular prism or the like. The shapes of the housing body 211 and the cover plate 212 are mutually matched. For example, as shown in Fig. 3, the housing body 211 may be of a rectangular prism structure, and the cover plate 212 is a rectangular plate-like structure adapted to the housing body 211.

For ease of explanation, the application takes the housing 21 as a rectangular prism as an example. Specifically, as shown in Fig. 3, the housing 21 includes: a housing body 211, which is of a hollow structure with one end open; a cover plate 212, which is used to cap the opening of the housing body 211 so as to form a closed chamber for placing the electrode assembly 22.

Optionally, the housing 21 of the embodiments of the application may be provided with a plurality of components. For example, as shown in Fig. 3, the battery cell 20 may further include a pressure relief mechanism 213. The pressure relief mechanism 213 may be arranged on any wall of the housing 21. For example, Fig. 3 takes the pressure relief mechanism 213 located on the cover plate 212 as an example. Specifically, the pressure relief mechanism 213 is used to be actuated when the internal pressure or temperature of the battery cell 20 reaches a threshold so as to release the internal pressure or temperature.

In addition, as shown in Fig. 3, any wall of the housing 21 of the battery cell 20 may also be provided with a liquid injection hole 215. For example, Fig. 3 takes the liquid injection hole 215 located on the cover plate 212 as an example. The liquid injection hole 215 is used to inject electrolyte solution into the interior of the housing 21 through the liquid injection hole 215.

Optionally, as shown in Fig. 3, the outer surface of the housing 21 may also be provided with a blue membrane 2111, which, for example, may be arranged on the outer surface of the housing body 211 so as to achieve an effect of insulation and protecting the battery cell 20, but the embodiments of the application are not limited thereto.

In the battery cell 20, the interior of the housing body 211 is used to accommodate the electrode assembly 22, and according to actual usage requirements, the amount of the electrode assembly 22 inside the housing body 211 may be set to one or more. For example, Fig. 3 takes the battery cell 20 including two electrode assemblies 22 arranged in a first direction X as an example, but the embodiments of the application are not limited thereto. Optionally, the first direction X, a second direction Y and a third direction Z are perpendicular to each other.

The electrode assembly 22 of the embodiments of the application is a component in the battery cell 20 that undergoes electrochemical reactions. The housing body 21 may be a cylinder, a rectangular prism or the like. If the electrode assembly 22 is of a cylindrical structure, the housing body 111 may also be of a cylindrical structure, and if the electrode assembly 22 is of a rectangular prism structure, the housing body 111 may be also be of a rectangular prism structure.

For any electrode assembly 22, the electrode assembly 22 may include an electrode tab 222 and a main portion 221. Specifically, as shown in Fig. 3, the electrode assembly 22 may include at least two electrode tabs 222. The two electrode tabs 222 may include a positive electrode tab 222a and a negative electrode tab 222b. The positive electrode tab 222a may be formed by stacking a portion on the positive electrode sheet coated with no positive electrode active material layer, and the negative electrode tab 222b may be formed by stacking a portion on the negative electrode sheet coated with no negative electrode active material layer. The main portion 221 of the electrode assembly 22 may be formed by stacking or winding a portion on the positive electrode sheet coated with the positive electrode active material layer and a portion of the negative electrode sheet coated with the negative electrode active material layer.

The housing 21 of the embodiments of the application is further provided with an electrode terminal 214, and the electrode terminal 214 is used to be electrically connected to the electrode assembly 22 so as to output the electrical energy of the battery cell 20. For example, as shown in Fig. 3, the battery cell 20 may further include at least two electrode terminals 214, and the two electrode terminals 214 may be arranged on the cover plate 212. The cover plate 212 is usually of a shape of flat plate, with the two electrode terminals 214 fixed on a flat plate surface of the cover plate 212. The two electrode terminals 214 are a positive electrode terminal 214a and a negative electrode terminal 214b respectively. Each electrode terminal 214 is provided with a corresponding connection member 30, and the connection member 30 is located between the cover plate 212 and the electrode assembly 22 for electrically connecting the electrode assembly 22 and the electrode terminal 214. Specifically, as shown in Fig. 3, the positive electrode tab 222a of the electrode assembly 22 may be connected to the positive electrode terminal 214a by a connection member 30, and the negative electrode tab 222b of electrode assembly 22 may be connected to the negative electrode terminal 214b by another connection member 30.

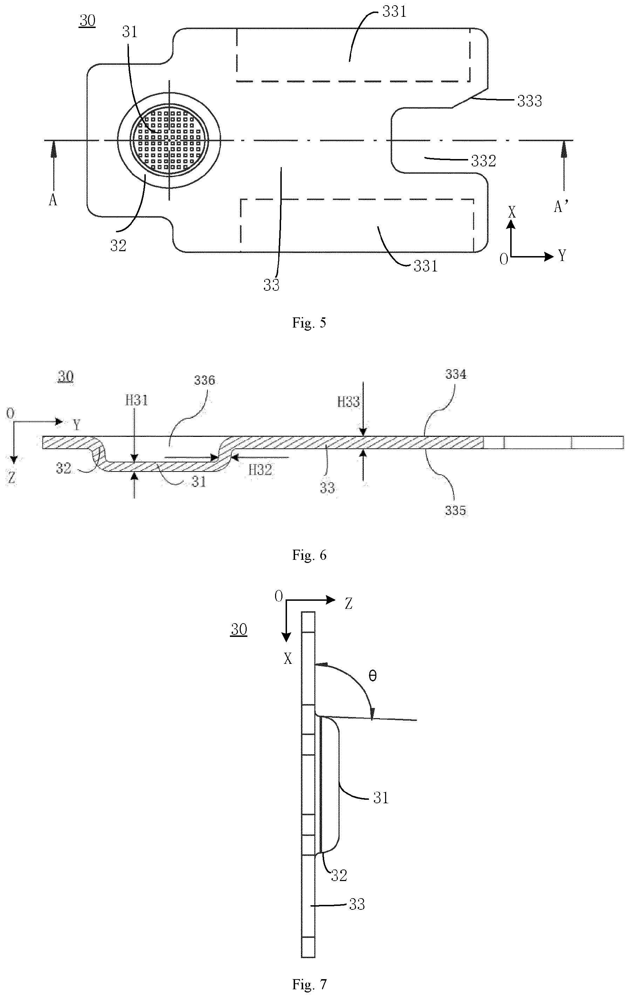

Fig. 4 is a schematic structural perspective view of a connection member of an embodiment of the application, Fig. 5 is a schematic top view of the connection member as shown in Fig. 4, and Figure 6 is a schematic sectional view of the connection member in the A-A' direction as shown in Fig. 5.

As shown in Figs. 4-6, the connection member of the embodiments of the application is used to achieve an electrical connection between the electrode terminal 214 and the electrode tab 222 of the battery cell 20. The connection member 30 includes a body portion 33 and an electrode terminal welding portion 31 connected to the body portion 33. The body portion 33 is used to be connected to the electrode tab 222, and the electrode terminal welding portion 31 is used to be welded to the electrode terminal 214. A hardness of the electrode terminal welding portion 31 is greater than a hardness of the body portion 33.

The electrode terminal welding portion 31 of the embodiments of the application is connected to the electrode terminal 214 in a manner of welding. Optionally, the manner of welding may be laser welding.

The embodiments of the application may increase the hardness of the electrode terminal welding portion 31 in a manner of stretching, pier compressing or heat treatment to be greater than the hardness of the body portion 33.

In the embodiments of the application, the hardness of the electrode terminal welding portion 31 is greater than the hardness of the body portion 33. On the premise that the hardness of the body portion 33 satisfies the requirements, the increased hardness of the electrode terminal welding portion 31 can increase its ability to resist deformation during transportation and assembly, and the smaller deformation can increase the fitting tightness between the electrode terminal welding portion 31 and the electrode terminal 214, thereby improving the welding reliability of the electrode terminal 214 and connection member 30, and thus improving the service life of the battery cell 20.

In some embodiments, the electrode terminal welding portion 31 is formed by stretching or pier compressing the connection member.

The processing method of stretching or pier compressing for thinning is easy to operate and has a lower processing cost.

In some embodiments, the hardness of the body portion 33 is H, the hardness of the electrode terminal welding portion 31 is H1, and H1 and H satisfy:1.05≤H1/H≤3.

In the embodiments, the hardness of the body portion 33 is an average hardness of the body portion 33, and the hardness of the electrode terminal welding portion 31 is also an average hardness of the electrode terminal welding portion 31. Taking the body portion 33 as an example, when conducting a measurement, N points may be selected on the body portion 33, and the hardness of the N points is measured respectively, and then the average hardness of the N points is calculated as the hardness of the body portion 33. Also, the hardness calculation method for the electrode terminal welding portion 31 is the same, that is, an average hardness of N points of the electrode terminal welding portion 31 is calculated as the hardness of the electrode terminal welding portion 31. For example, N is 10.

The embodiments of the application do not limit the measurement method of hardness. For example, the methods such as Shore, Metal Rockwell, Metal Brinell, or Metal Vickers may be used for measurement. It should be noted that the hardness measurement methods for the body portion 33 and for the electrode terminal welding portion 31 should be consistent. For example, when the hardness of the electrode terminal welding portion 31 is measured with the Metal Vickers measurement method, it is also required to use the Metal Vickers measurement method for the body portion 33.

The inventor has found that as the hardness of the material increases, the internal stress during welding will correspondingly increase; however, when the hardness of the material is too high, the internal stress will be too high; after cooling and solidification, the excessive internal stress will make the electrode terminal welding portion 31 prone to cracks, thereby reducing the reliability of connection between the electrode terminal welding portion 31 and the electrode terminal 214. In particular, after the hardness of the electrode terminal welding portion 31 is increased by stretching or pier compressing processes, a residual processing stress will occur in the electrode terminal welding portion 31. When welding thereafter, the processing stress in the electrode terminal welding portion 31 will be superimposed with an excessive internal stress, making it easier for cracks to occur in the electrode terminal welding portion 31, thereby affecting welding quality, reducing the reliability of connection between the electrode terminal welding portion 31 and the electrode terminal 214, and reducing the service life of the battery cell 20.

On the premise that the hardness of the body portion 33 satisfies the requirements for welding with the electrode tab 222, taking the hardness of the body portion 33 as a baseline, the greater the hardness of the electrode terminal welding portion 31 relative to the body portion 33 is, the stronger its ability to resist deformation is and the higher the reliability of the connection to the electrode terminal 214 is. However, when the hardness of the electrode terminal welding portion 31 is too high, the internal stress during welding will also be too high, and it is more prone to cracks after cooling and solidification, resulting in poorer welding quality. On the premise that the hardness of the electrode terminal welding portion 31 is greater than the hardness of the body portion 33, the smaller the hardness of the electrode terminal welding portion 31 relative to the body portion 33 is, the less significant the increase in resistance to deformation of the electrode terminal welding portion 31 is. In view of this, this application balances the resistance to deformation and cracking issues of the electrode terminal welding portion 31 by limiting the ratio of the hardness of the body portion 33 to the hardness of the electrode terminal welding portion 31.

The greater the value of H1/H is, the easier it is for cracks to occur during welding, and the poorer the welding quality is; the less the value of H1/H is, the less significant the improvement in resistance to deformation is.

In view of this, the value of H1/H is limited to be less than or equal to 3, so as to reduce the internal stress during welding of the electrode terminal welding portion 31, thereby reducing the occurrence of cracks and enhancing welding quality. The value of H1/H is limited to be greater than or equal to 1.05, so as to further improve the deformation resistance of the electrode terminal welding portion 31, enhance welding effect, and enhance the stability and safety of the battery cell 20.

Optionally, the value of H1/H may be 1.05, 1.1, 1.3, 1.5, 2, 2.1, 2.2, 2.4, 2.5, 2.6, 2.8 or 3.

Optionally, the material of the connection member 30 is copper or aluminum.

In some embodiments, H1 and H satisfy: 1.05≤H1/H≤2.

The value of H1/H is further limited to be less than or equal to 2, so as to further reduce the internal stress generated during welding, thereby further reducing the occurrence of cracks during welding and enhancing welding quality.

In some embodiments, H satisfies: 20kgf/mm²≤H≤70kgf/mm².

The greater the hardness of the material is, the greater the internal stress during welding is, and the easier it is for cracks to occur, resulting in poorer welding quality; the less the hardness of the material is, the weaker the ability to resist deformation is, making it more prone to deformation, resulting in poorer welding quality and even melting through during welding.

In view of this, the hardness of the body portion 33 is limited to be less than or equal to 70kgf/mm², so as to reduce the cracks and enhance welding quality. The hardness of the body portion 33 is limited to be greater than or equal to 20kgf/mm², so as to enhance the strength of the body portion 33, make it less prone to deformation, and enhance welding quality.

Optionally, the value of H may be 20kgf/mm², 30kgf/mm², 40kgf/mm², 50kgf/mm², 60kgf/mm², or 70kgf/mm².

In some embodiments, H1 satisfies: 20kgf/mm²<H1≤210kgf/mm².

As mentioned above, the higher the hardness of the electrode terminal welding portion 31 is, the greater the internal stress during welding is, making it more prone to cracks during welding and resulting in poorer welding quality. The lower the hardness of the electrode terminal welding portion 31 is, the lower its strength is, and the more prone to deformation it is during welding, even resulting in welding through.

In view of this, the hardness of the electrode terminal welding portion 31 is limited to be less than or equal to 210kgf/mm², so as to reduce the internal stress during welding, reduce the occurrence of cracks and enhance welding quality. The hardness of the electrode terminal welding portion 31 is limited to be greater than 20kgf/mm², so as to enhance the strength of the electrode terminal welding portion 31, make it less prone to deformation, and enhance welding quality.

Optionally, the value of H1 may be 30kgf/mm², 50kgf/mm², 70kgf/mm², 90kgf/mm², or 120kgf/mm², 150kgf/mm², 170kgf/mm², 180kgf/mm², 200kgf/mm², or 210kgf/mm².

In some embodiments, a thickness of the electrode terminal welding portion 31 is less than a thickness of the body portion 33.

In the embodiments of the application, the thickness H31 of the electrode terminal welding portion 31 may be the thickness of the electrode terminal welding portion 31 in a third direction Z, and the third direction Z is perpendicular to a surface of the electrode terminal welding portion 31 facing towards the electrode terminal 214, or perpendicular to a surface of the electrode terminal welding portion 31 away from the electrode terminal 214. Similarly, in the embodiments of the application, the thickness H33 of the body portion 33 may also be the thickness of the body portion 33 in the third direction Z.

In the embodiments of the application, the electrode terminal welding portion 31 may be configured to have a uniform and equal thickness in different regions, or may also be configured to have an unequal thickness. Specifically, the thickness of different regions of the electrode terminal welding portion 31 is usually configured to be equal for ease of processing. If the thickness of different regions of the electrode terminal welding portion 31 is not equal, for example, only a local part of the electrode terminal welding portion 31 is subjected to a thinning treatment, the thickness H31 of the electrode terminal welding portion 31 in the embodiments of the application may indicate a maximum value, an average value, or a minimum value of the thickness of the electrode terminal welding portion 31, which is not limited by the embodiments of the application.

In the embodiments of the application, the thickness of different regions of the body portion 33 may also be configured to be equal or unequal. Specifically, the thickness of different regions of the body portion 33 is usually configured to be equal for ease of processing. If the thickness of different regions of the body portion 33 is not equal, the calculation method for the thickness H33 of the body portion 33 in the embodiments of the application should be consistent with that of the electrode terminal welding portion 31. The thickness H33 of the body portion 33 may also indicate a maximum value, an average value, or a minimum value of the thickness of the body portion 33. For example, if the thickness of different regions of the electrode terminal welding portion 31 is different and the thickness of different regions of the body portion 33 is also different, the thickness H31 of the electrode terminal welding portion 31 may be the maximum value of the thickness of the electrode terminal welding portion 31, and correspondingly, the thickness H33 of the body portion 33 may also be the maximum value of the thickness of the body portion 33, but the embodiments of the application are not limited thereto.

When the hardness of the electrode terminal welding portion 31 is relatively high relative to the body portion 33, the internal stress of the electrode terminal welding portion 31 during welding is greater. Therefore, the thickness of the electrode terminal welding portion 31 relative to the body portion 33 is reduced, so as to reduce the welding power during welding, so that it is possible to reduce the internal stress during welding, reduce the occurrence of cracks, and enhance welding quality. In some embodiments, the electrode terminal welding portion 31 is provided with a plurality of grooves 312a on a side away from the electrode terminal 214.

The embodiments of the application do not limit the arrangement of the grooves 312a, and the plurality of grooves 312a may be arranged in an array or in a scattered manner.

In the embodiments of the application, the sizes of the plurality of grooves 312a may be the same or different, and it may also be the case that a part of the grooves 312a have the same size while the remaining have different sizes.

By providing the grooves 312a, it is possible to reduce a thickness of a local region of the electrode terminal welding portion 31, reduce the welding power, reduce the internal stress of welding, enhance the welding effect, and thereby enhance the stability and safety of the battery cell 20. Meanwhile, by providing the grooves 312a, it is possible to increase a roughness of the surface of the electrode terminal welding portion 31 away from the electrode terminal 214, thereby enhancing welding quality.

In some embodiments, the electrode terminal welding portion includes a body region 311 and a knurling region 312, the grooves 312a are recessed from a surface of the body region 311 away from the electrode terminal 214, and the knurling region 312 corresponds to bottom walls of the grooves 312a; a hardness of the knurling region 312 is greater than a hardness of the body region 311.

In the embodiments of the application, the hardness of the knurling region 312 is an average hardness of the knurling region 312, and the hardness of the body region 311 is also an average hardness of the body region 311. Taking the hardness measurement of the knurling region 312 as an example, when conducting a measurement, the bottom walls of N grooves 312a may be selected in the knurling region 312, and the hardness of the bottom walls of the N grooves 312a is measured respectively, and then the average value of the hardness of the bottom walls of the N grooves 312a is calculated as the hardness of the knurling region 312. When measuring the hardness of the body region 311, N points may be selected in the body region 311, and the average hardness of the N points in the body region 311 is calculated as the hardness of the body region 311. Here N is a positive integer. For example, N is 8,10 or 12.

The embodiments of the application do not limit the measurement method of hardness. For example, the methods such as Shore, Metal Rockwell, Metal Brinell, or Metal Vickers may be used for measurement. It should be noted that the hardness measurement methods for the knurling region 312 and for the body region 311 should be consistent. For example, when the hardness of the knurling region 312 is measured with the Metal Vickers measurement method, it is also required to use the Metal Vickers measurement method for the body region 311.

The hardness of the knurling region 312 is greater than the hardness of the body region 311, which means that the deformation resistance of the bottom walls of the grooves 312a is increased after being thinned, thereby enhancing welding quality.

Optionally, the knurling region 312 is formed in a manner of pier compressing.

In some embodiments, a depth of the grooves 312a is 0.03mm-0.2mm.

In the embodiments of the application, the value range of the depth of the knurling region 312 includes the two end values of 0.03mm and 0.2mm.

The greater the depth of the grooves 312a is, the less the thickness of the bottom walls of the grooves 312a is, the lower the welding power may be and the less the internal stress during welding is, the better the welding quality is. However, if the depth of the grooves 312a is too large, it will cause an over design and easily cause the knurling region 312 to be too thin and thus be welded through. The less the depth of the grooves 312a is, the less the decrease in the bottom wall thickness of the grooves 312a is, and the less significant the improvement in the internal stress issues is.

In view of this, the depth of the grooves 312a is limited to be less than or equal to 0.2mm, so as to reduce the possibility of welding through the bottom walls of the grooves 312a. The depth of the grooves 312a is limited to be greater than or equal to 0.03mm, so as to significantly reduce the thickness of the bottom walls of the grooves 312a and reduce welding power, thereby reducing the internal stress during welding, reducing the occurrence of cracks and enhancing welding quality.

In some optional embodiments, the thickness H31 of the electrode terminal welding portion 31 and the thickness H33 of the body portion 33 satisfy: 5%≤(H33-H31)/H33≤65%.

Here, (H33-H31)/H33 can characterize the thinned amplitude of the electrode terminal welding portion 31 relative to the body portion 33. The greater the value of (H33-H31)/H33 is, the greater the thinned amplitude of the electrode terminal welding portion 31 is, and the less the thickness H31 of the electrode terminal welding portion 31 is, the less the internal stress during welding is. However, if the thickness H31 of the electrode terminal welding portion 31 is too small, it may cause melting through the electrode terminal welding portion 31 during welding; on the contrary, if the thinned amplitude of the electrode terminal welding portion 31 is too small, the internal stress of welding cannot be effectively reduced.

In view of this, the value of (H33-H31)/H33 is limited to be less than or equal to 65%, so as to reduce the possibility of electrode terminal welding portion 31 being melted through; the value of (H33-H31)/H33 is limited to be greater than or equal to 5%, so as to effectively reduce the internal stress of welding, reduce cracks, and enhance welding quality.

Optionally, the values of (H33-H31)/H33 may be 5%, 10%, 20%, 30%, 40%, 50%, 60%, or 65%.

For example, the ratio of the thickness H31 of the electrode terminal welding portion 31 to the thickness H33 of the body portion 33 may be configured to be greater than or equal to 1/2; for another example, the ratio of the thickness H31 of the electrode terminal welding portion 31 to the thickness H33 of the body portion 33 may be configured to be greater than or equal to 2/3.

In some optional embodiments, an area of a surface of the electrode terminal welding portion 31 facing towards the electrode terminal 214 is S1, an area of a surface of the connection member 30 facing towards the electrode terminal is S2, and S1 and S2 satisfy: 1/50≤S1/S2≤3/5.

Optionally, considering that the electrode terminal welding portion 31 of the embodiments of the application may have a local increase in hardness, a value ratio of the area of the surface facing towards the electrode terminal in the region of the electrode terminal welding portion 31 with the increased hardness to the area of the surface facing towards the electrode terminal of the connection member 30 may be configured as [1/50,3/5].

If the area of the surface of the electrode terminal welding portion 31 facing towards the electrode terminal 214 is too small, that is, the region of the electrode terminal welding portion 31 with the increased hardness is too small, for example, if the actual welding area exceeds the region with the increased hardness, the region with the increased hardness cannot effectively solve the problem of easy deformation. On the contrary, if the area of the surface of the electrode terminal welding portion 31 facing towards the electrode terminal 214 is too large, that is, the region with the increased hardness is too large, due to the limited actual welding area, the excessive area will increase the processing difficulty of the connection member 30 and reduce production efficiency.

The value of S1/S2 is limited to be greater than or equal to 1/50, so as to effectively solve the problem of easy deformation; the value of S1/S2 is limited to be less than or equal to 3/5, so as to reduce processing difficulty.

In the embodiments of the application, the surface of the electrode terminal welding portion 31 facing towards the electrode terminal 214 protrudes from or is recessed from or is flush with the surface of the body portion 33 facing towards the electrode terminal 214.

In some embodiments, the body portion 33 includes a first surface 334 and a second surface 335 arranged opposite to each other, and the second surface 335 faces towards the electrode terminal 214; the connection member includes a recess 336, the recess 336 is recessed relative to the first surface 334, and the electrode terminal welding portion 31 is located at a bottom of the recess 336.

The recess 336 of the embodiments of the application refers to a recessed space.

In some embodiments, the connection member 30 further includes a connection portion 32, and the connection portion 32 protrudes from the second surface 335 and connects the body portion 33 and the electrode terminal welding portion 31; the connection portion 32 and the electrode terminal welding portion 31 enclose and form the recess 336.

In the embodiments of the application, the shape of the connection portion 32 is not limited, and for example, may be an annular structure, a plate-like structure or other shapes.

By providing the connection portion 32, the electrode terminal welding portion 31 and the body portion 33 are staggered in the thickness direction of the connection member 30, i.e. in the third direction Z, so that the electrode terminal welding portion 31 can be located closer to the electrode terminal 214 when the connection member 30 is mounted in the battery cell 20, facilitating the connection therebetween.

Optionally, the connection portion 32 of the embodiments of the application is located between the electrode terminal welding portion 31 and the body portion 33, and the connection portion 32 may also be thinned. Specifically, the thickness H32 of the connection portion 32 is less than the thickness H33 of the body portion 33 for ease of processing, and meanwhile, the overall weight of the connection member 30 can be reduced, thereby reducing the weight of the battery cell 20. The connection portion 32 may also be subjected to hardness increase treatment, and the hardness of the connection portion 32 is greater than the hardness of the body portion 33 so as to increase its resistance to deformation.

In the embodiments of the application, the thickness H32 of the connection portion 32 may be set according to the actual application. For example, the thickness H32 of the connection portion 32 is greater than the thickness H31 of the electrode terminal welding portion 31, both facilitating processing and ensuring the reliability of the connection portion 32. The hardness of the connection portion 32 may also be set according to the actual application. For example, the hardness of the connection portion 32 is less than the hardness of the electrode terminal welding portion 31 for ease of processing.

In some optional embodiments, a ratio of the thickness H32 of the connection portion 32 to the thickness H33 of the body portion 33 is greater than or equal to 4/5, so as to avoid the structural instability of the connection member 30 when the thickness H32 of the connection portion 32 is too small.

In the embodiments of the application, thinning of the electrode terminal welding portion 31 and/or the connection portion 32 may be achieved in various ways, and the thinning of the electrode terminal welding portion 31 and the connection portion 32 may be achieved in the same or different ways. For example, the thinning of the electrode terminal welding portion 31 and the connection portion 32 may be achieved simultaneously in the same way to improve processing efficiency. For example, the thinning of the electrode terminal welding portion 31 and the connection portion 32 may be achieved through stamping and stretching, or may also be achieved through turning or pier thinning, and the embodiments of the application are not limited thereto.

Fig. 7 is a schematic side view of the connection member as shown in Fig. 4.

Optionally, the connection portion 32 of the embodiments of the application is used to connect the body portion 33 and the electrode terminal welding portion 31, and an included angle *θ* between the connection portion 32 and the body portion 33 of the embodiments of the application may be set according to the actual processing requirements. Specifically, as shown in Figs. 4 to 7, considering that a rounded corner is usually provided between the connection portion 32 and the body portion 33, a rounded corner is also provided between the connection portion 32 and the electrode terminal welding portion 31 for ease of processing. Therefore, the included angle *θ* between the connection portion 32 and the body portion 33 in the embodiments of the application refers to an included angle between the rounded region of the connection portion 32 and the rounded region of the body portion 33.

In some embodiments, a value range of the included angle *θ* between the connection portion 32 and the body portion 33 is (91°,130°].

The included angle *θ* between the connection portion 32 and the body portion 33 is also a withdrawing pattern angle *θ* during processing. The less the withdrawing pattern angle *θ* is, the more difficult it is to demold; on the contrary, the greater the withdrawing pattern angle *θ* is, the greater the difficulty of processing is.

In view of this, the withdrawing pattern angle *θ* is limited to be greater than 91° for facilitating demolding; the withdrawing pattern angle *θ* is limited to be less than or equal to 130°, so as to reduce processing difficulty.

In some embodiments, the body portion 33 includes an electrode tab welding region 331, the electrode tab welding region 331 is used to be welded to the electrode tab 222 so as to achieve the connection between the connection member 30 and the electrode tab 222. Specifically, the electrode tab welding region 331 may be at least a partial region of the body portion 33; moreover, the body portion 33 may include a connected electrode tab welding region 331, or may also include a plurality of disconnected electrode tab welding regions 331. For example, Fig. 5 shows a possible location of the electrode tab welding region 331, but the embodiments of the application are not limited thereto.

Optionally, as shown in Figs. 4 to 7, the relative positions of the electrode tab welding region 331 and the electrode terminal welding portion 31 of the embodiments of the application may be set according to the actual application. For example, the electrode tab welding region 331 is located at an end of the body portion 33 away from the electrode terminal welding portion 31, so as to avoid a mutual influence between the electrode tab welding region 331 and the electrode terminal welding portion 31 and also facilitate processing.

Optionally, the electrode tab welding region 331 and the electrode tab 222 of the embodiments of the application may be electrically connected to each other by welding, for example, in a manner of ultrasonic welding.

Optionally, as shown in Figs. 4 to 7, the body portion 33 of the connection member 30 may further have a notch 332. For example, the notch 332 may be arranged in a region of the body portion 33 far from the electrode terminal welding portion 31 so as to remove redundant material of the body portion 33, thereby reducing the weight of the connection member 30 and allowing the weight of the battery cell 20 to be reduced.

Optionally, as shown in Figs. 4 to 7, the shape of the notch 332 of the body portion 33 may be U-shaped for easy processing. In addition, the connection member 30 may also be provided with a chamfered structure 333, and the chamfered structure 333 can be used for fool-proofing so as to facilitate the installation of the connection member 30. Optionally, the chamfered structure 333 may be provided at any corner of the connection member 30, for example, the chamfered structure 333 may be provided at an edge corner of the U-shaped notch 332, or the chamfered structure 333 may also be provided at other corner positions, and the embodiments of the application are not limited thereto.

It should be noted that the shape and position of the electrode terminal welding portion 31 of the embodiments of the application may be set according to the actual application. For example, the shape of the electrode terminal welding portion 31 may be circular, rectangular, or triangular for easy processing.

As shown in Figs. 4 to 7, the connection portion 32 encircles the electrode terminal welding portion 31, and the connection portion 32 and the electrode terminal welding portion 31 enclose and form a recess 336. The body portion 33 encircles the connection portion 32.

Optionally, unlike the connection member 40 as shown in Figs. 4 to 7, the electrode terminal welding portion 31 of the embodiments of the application may also have other arrangements.

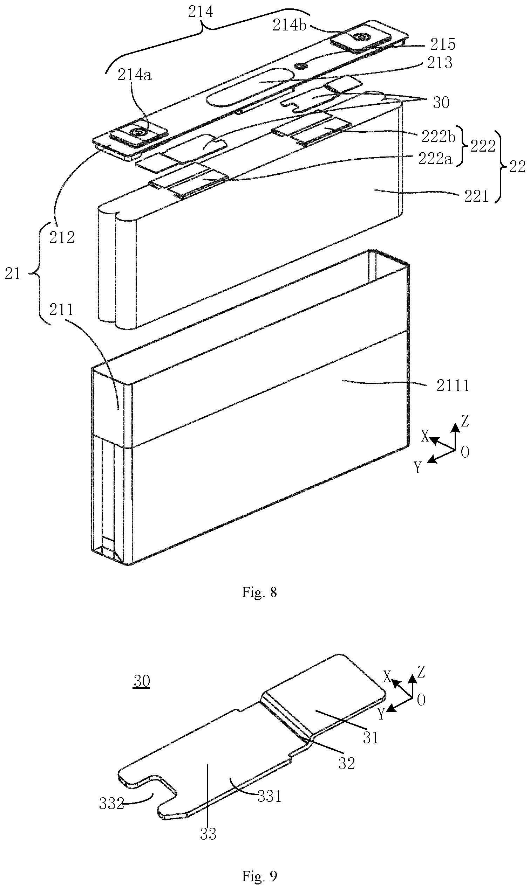

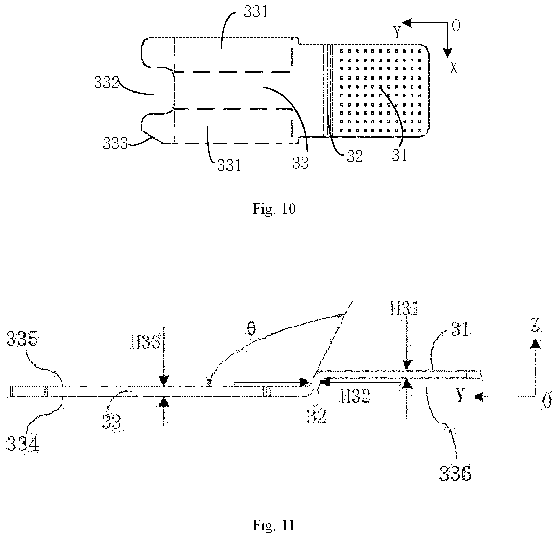

Fig. 8 shows a schematic structural exploded view of a battery cell of another embodiment of the application; Fig. 9 is a schematic structural view of a connection member of another embodiment of the application, for example, the connection member 30 as shown in Fig. 9 may be any connection member 30 inside the battery cell 20, and here the connection member 30 as shown in Fig. 9 is taken as the right connection member 30 as shown in Fig. 8 as an example; Fig. 10 is a schematic top view of a connection member of another embodiment of the application, that is, Fig. 10 shows a surface of the connection member 30 facing towards the electrode assembly 22; Fig. 11 is a schematic side view of the connection member as shown in Fig. 9.

For example, similar to the connection member 30 as shown in Figs. 3 to 7, the connection member 30 as shown in Figs. 8 to 11 also includes a recess 336 and a connection portion 32, and the connection portion 32 and the electrode terminal welding portion 31 enclose and form the recess 336.

However, unlike the connection member 30 as shown in Figs. 3 to 7, the electrode terminal welding portion 31 and the body portion 33 of the connection member 30 as shown in Figs. 8 to 11 are located at two opposite ends of the connection portion 32 respectively, making it easier to process and avoiding a mutual influence between the electrode terminal welding portion 31 and the body portion 33.

It should be noted that a surface of the electrode terminal welding portion 31 facing towards the electrode terminal 214 of the embodiments of the application protrudes from a surface of the body portion 33 facing towards the electrode terminal 214, and a surface of the electrode terminal welding portion 31 away from the electrode terminal 214 may also protrude from the surface of the body portion 33 facing towards the electrode terminal 214; alternatively, in a different way, the surface of the electrode terminal welding portion 31 away from the electrode terminal 214 may also be flush with the surface of the body portion 33 facing towards the electrode terminal 214, and the embodiments of the application are not limited thereto.

The remaining descriptions of the connection member 30 as shown in Figs. 8 to 11 are applicable to the relevant descriptions of the connection member 30 as shown in Figs. 3 to 7. For example, the thickness, hardness, and angle of each region of the connection member 30 in Figs. 8 to 11 are the same as those of the connection member 30 as shown in Figs. 3 to 7, which will not be repeated here for simplicity.

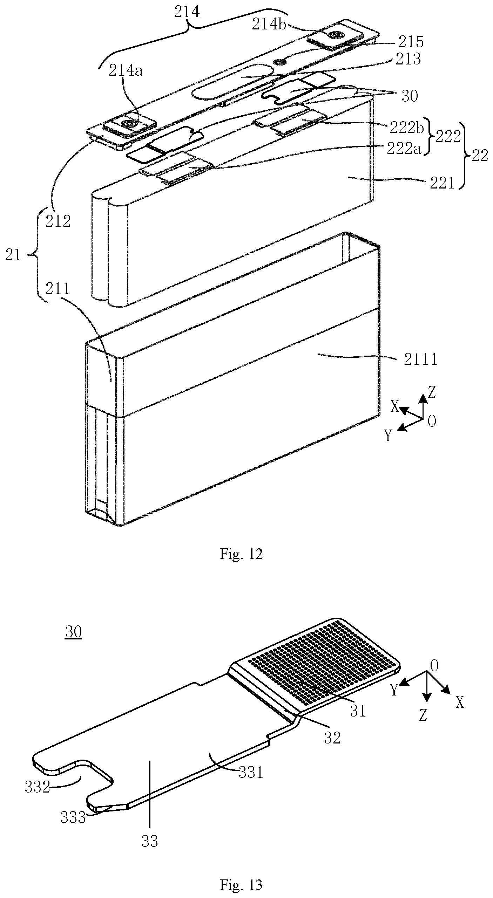

Optionally, as another embodiment, the surface of the electrode terminal welding portion 31 facing towards the electrode terminal 214 may also be recessed from the surface of the body portion 33 facing towards the electrode terminal 214. Specifically, Fig. 12 is a schematic structural exploded view of a battery cell of yet another embodiment of the application; Fig. 13 is a schematic structural view of a connection member of yet another embodiment of the application, for example, the connection member 30 as shown in Fig. 13 may be any connection member 30 inside the battery cell 20, and here the connection member 30 as shown in Fig. 13 is taken as the right connection member 30 as shown in Fig. 12 as an example.

The only difference between tis embodiment and the connection member 30 as shown in Figs. 8 to 11 is that the surface of the electrode terminal welding portion 31 facing towards the electrode terminal 214 in Figs. 8 to 11 protrudes from the surface of the body portion 33 facing towards the electrode terminal 214, while the surface of the electrode terminal welding portion 31 facing towards the electrode terminal 214 in the connection member 30 as shown in Figs. 12 and 13 is recessed from the surface of the body portion 33 facing towards the electrode terminal 214, that is, the relative position of the electrode terminal welding portion 31 and the body portion 33 is different.

By configuring the surface of the electrode terminal welding portion 31 of the connection member 30 facing towards the electrode terminal 214 to be recessed from the surface of the body portion 33 facing towards the electrode terminal 214, it is possible to more fully utilize the space between the main portion 221 of the electrode assembly 22 and the surface of the electrode terminal 214 facing towards the main portion 221. In particular, when the surface of the electrode terminal 214 facing towards the main portion 221 protrudes from the surface of the cover plate 212 where it is located facing towards the main portion 221, by configuring the surface of the electrode terminal welding portion 31 facing towards the electrode terminal 214 to be recessed from the surface of the body portion 33 facing towards the electrode terminal 214, it is possible to improve the space utilization rate inside the battery cell 20.

Optionally, when the surface of the electrode terminal welding portion 31 of the connection member 30 facing towards the electrode terminal 214 is recessed from the surface of the body portion 33 facing towards the electrode terminal 214, as shown in Figs. 12 and 13, the surface of the electrode terminal welding portion 31 away from the electrode terminal 214 may also be recessed from the surface of the body portion 33 away from the electrode terminal 214; alternatively, in a different way, the surface of the electrode terminal welding portion 31 away from the electrode terminal 214 may also be flush with the surface of the body portion 33 away from the electrode terminal 214, and the embodiments of the application are not limited thereto.

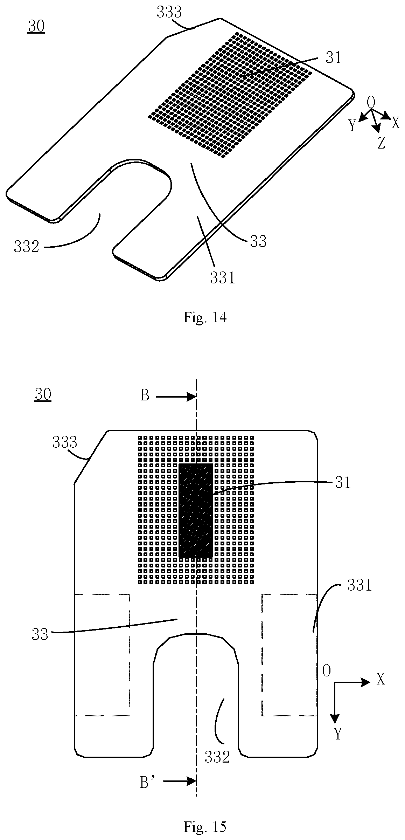

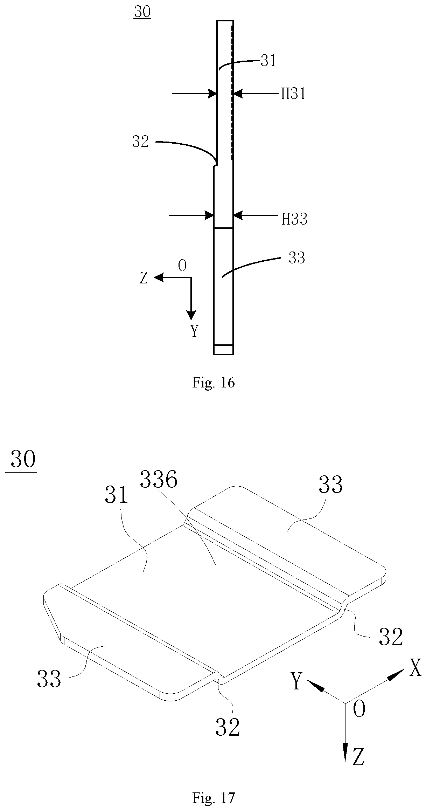

Fig. 14 is a schematic structural view of a connection member of yet another embodiment of the application; Fig. 15 is a schematic top view of a connection member of yet another embodiment of the application; Fig. 16 is a schematic sectional view of the connection member in the B-B' direction as shown in Fig. 15.

If the thinned thickness of the electrode terminal welding portion 31 of the connection member 30 is not considered, the electrode terminal welding portion 31, the connection portion 32 and the body portion 33 may be configured to be flush with each other, that is, the connection member 30 may be of a uniform flat plate-like structure. In this way, when the thickness of the electrode terminal welding portion 31 of the connection member 30 is less than the body portion 33, it may be achieved by thinning the side of the electrode terminal welding portion 31 away from the electrode terminal 214 and/or thinning the side of the electrode terminal welding portion 31 facing towards the electrode terminal 214.

For example, as shown in Figs. 14 to 16, the side of the electrode terminal welding portion 31 close to the electrode terminal 214 may be thinned so as to make the thickness H31 of the electrode terminal welding portion 31 less than the thickness H33 of the body portion 33. Here, as shown in Fig. 16, the thickness of the connection portion 32 may gradually increase from the side close to the electrode terminal welding portion 31 to the side close to the body portion 33, so as to make the electrode terminal welding portion 31 uniformly transition to the body portion 33 and facilitate processing.

Optionally, the area of the electrode terminal welding portion 31 of the embodiments of the application may be greater than or equal to the area of the actual welding region between the electrode terminal 214 and the connection member 30.

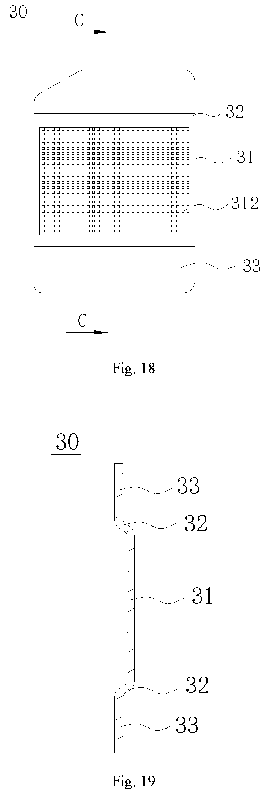

Fig. 17 is a schematic structural view of a connection member of still another embodiment of the application; Fig. 18 is a schematic top view of a connection member of still another embodiment of the application; Fig. 19 is a schematic sectional view of the connection member in the C-C' direction as shown in Fig. 18.

As shown in Figs. 17-19, each of the amounts of the connection portions 32 and the body portions 33 of the connection member 30 is two. The two connection portions 32 are connected to two ends of the electrode terminal welding portion 31 opposite to each other in the first direction X, each body portion 33 is connected to the end of the connection portion 32 away from the electrode terminal welding portion 31, the two connection portions 32 and the electrode terminal welding portion 31 enclose and form a recess 336, and the two body portions 33 are connected to two electrode tabs 222 one-to-one.

It should be noted that a surface of the electrode terminal welding portion 31 facing towards the electrode terminal 214 of the embodiments of the application protrudes from a surface of the body portion 33 facing towards the electrode terminal 214, and a surface of the electrode terminal welding portion 31 away from the electrode terminal 214 may also protrude from the surface of the body portion 33 facing towards the electrode terminal 214; alternatively, in a different way, the surface of the electrode terminal welding portion 31 away from the electrode terminal 214 may also be flush with the surface of the body portion 33 facing towards the electrode terminal 214, and the embodiments of the application are not limited thereto. The knurling region 312 is located on the surface of the electrode terminal welding portion 31 away from the electrode terminal 214.

Two body portions 33 are provided to be connected to two electrode tabs 222 one-to-one, so that after long-term use, if one of the body portions 33 is disconnected from the electrode tab 222 due to an external force, the other can still remain connected, thereby improving the service life of the battery cell 20.

According to some embodiments of the application, the embodiments of the application further provide a battery cell 20, including an electrode terminal 214, an electrode assembly 22, and the connection member 30 of any of the above embodiments. The electrode assembly includes an electrode tab 222, and the connection member 30 is used to achieve an electrical connection between the electrode terminal 214 and the electrode tab 222.

According to some embodiments of the application, the embodiments of the application further provide a battery 10 including a plurality of battery cells 20, and the battery cells 20 include the connection member 30 of any of the above embodiments.

According to some embodiments of the application, the embodiments of the application further provide an electric device including a battery 10, the battery 10 is used to provide electric energy to the electric device, and the battery 10 includes the connection member 30 of any of the above embodiments.

Referring to Figs. 3-7, the embodiments of the application provide a connection member 30 for achieving an electrical connection between an electrode terminal 214 and an electrode tab 222 of a battery cell 20; the connection member 30 includes a body portion 33 and an electrode terminal welding portion 31 connected to the body portion 33, the body portion 33 is used to be connected to the electrode tab 222, and the electrode terminal welding portion 31 is used to be welded to the electrode terminal 214; a hardness of the electrode terminal welding portion 31 is greater than a hardness of the body portion 33. The hardness of the body portion 33 is H, the hardness of the electrode terminal welding portion 31 is H1, and H1 and H satisfy:1.05≤H1/H≤3.

Although the application has been described with reference to preferred embodiments, it is possible to make various improvements of it and substitute components therein with equivalents without departing from the scope of the application, and in particular, the various technical features mentioned in various embodiments can be combined in any way. The application is not limited to the specific embodiments disclosed herein, but includes all the technical solutions which fall into the scope of the claims.

## Claims

1. A connection member for achieving an electrical connection between an electrode terminal and an electrode tab of a battery cell, the connection member comprising a body portion and an electrode terminal welding portion connected to the body portion, the body portion being used to be connected to the electrode tab, the electrode terminal welding portion being used to be welded to the electrode terminal;
a hardness of the electrode terminal welding portion is greater than a hardness of the body portion.

2. The connection member according to claim 1, wherein the hardness of the body portion is H, the hardness of the electrode terminal welding portion is H1, and H1 and H satisfy:1.05≤H1/H≤3.

3. The connection member according to claim 2, wherein H1 and H satisfy: 1.05≤H1/H≤2.

4. The connection member according to claim 2, wherein H satisfies: 20kgf/mm²≤H≤70kgf/mm².

5. The connection member according to claim 2, wherein H1 satisfies: 20kgf/mm²< H1≤210kgf/mm².

6. The connection member according to any of claims 1-5, wherein a thickness of the electrode terminal welding portion is less than a thickness of the body portion.

7. The connection member according to any of claims 1-6, wherein the electrode terminal welding portion is provided with a plurality of grooves on a side away from the electrode terminal.

8. The connection member according to claim 7, wherein
the electrode terminal welding portion comprises a body region and a knurling region, the grooves are recessed from a surface of the body region away from the electrode terminal, and the knurling region corresponds to bottom walls of the grooves;
a hardness of the knurling region is greater than a hardness of the body region.

9. The connection member according to claim 8, wherein a depth of the grooves is 0.03mm-0.2mm.

10. The connection member according to any of claims 1-9, wherein the body portion comprises a first surface and a second surface arranged opposite to each other in its own thickness direction, and the second surface faces towards the electrode terminal;
the connection member comprises a recess, the recess is recessed relative to the first surface, and the electrode terminal welding portion is located at a bottom of the recess.

11. The connection member according to claim 10, wherein the connection member further comprises a connection portion, and the connection portion protrudes from the second surface and connects the body portion and the electrode terminal welding portion;
the connection portion and the electrode terminal welding portion enclose and form the recess.

12. The connection member according to claim 11, wherein a value range of an included angle between the connection portion and the body portion is (91°, 130°].

13. The connection member according to claim 11, wherein a ratio of a thickness of the connection portion to the thickness of the body portion is greater than or equal to 4/5.

14. The connection member according to claim 6, wherein the thickness H31 of the electrode terminal welding portion and the thickness H33 of the body portion satisfy: 5%≤(H33-H31)/H33≤65%.

15. The connection member according to any of claims 1-14, wherein an area of a surface of the electrode terminal welding portion facing towards the electrode terminal is S1, an area of a surface of the connection member facing towards the electrode terminal is S2, and S1 and S2 satisfy: 1/50≤S1/S2≤3/5.

16. A battery cell, comprising:
an electrode terminal;
an electrode assembly comprising an electrode tab;
the connection member according to any of claims 1 to 15 used to achieve an electrical connection between the electrode terminal and the electrode tab.

17. A battery, comprising:
a plurality of battery cells, comprising the connection member according to any of claims 1 to 15.

18. An electric device comprising:
a battery for providing electric energy to the electric device, the battery comprising the connection member according to any of claims 1 to 15.
